# EUROPÄISCHE PATENTSCHRIFT

(11) **EP 0 943 709 B1**
(45) Veröffentlichungstag und Bekanntmachung des Hinweises auf die Patenterteilung: **03.07.2002**
(21) Anmeldenummer: 99104167.4
(22) Anmeldetag: 02.03.1999
(51) Int. Cl.: D03D 11/00

(54) **Textiles Flächengebilde mit Sollbruch-Linie**
Flat textile structure with tear line
Structure textile plane avec ligne de déchirement

(30) Priorität: 18.03.1998 DE 19811685
(43) Veröffentlichungstag der Anmeldung: 22.09.1999
(73) Patentinhaber: Viktor Achter GmbH & Co KG, 41751 Viersen (DE)
(72) Erfinder: Brüggemann, Werner, 47804 Krefeld (DE); Klöckes, Uwe, 41751 Viersen (DE)
(74) Vertreter: HOFFMANN - EITLE

(56) Entgegenhaltungen:
- EP-A- 0 033 934
- GB-A- 1 507 152
- NL-C- 121 928

## Beschreibung

Es sind textile Flächengebilde bekannt, die sich im Bedarfsfall in einem definierten Bereich öffnen bzw. teilen, wenn quer zur Gewebeebene eine festgelegte Mindestkraft aufgebracht wird. Derartige, eine Sollbruchlinie aufweisende textile Flächengebilde werden beispielsweise in Kraftfahrzeugen als Verkleidung von Innentürseiten oberhalb von in den Türen angebrachten Airbags eingesetzt. Die bekannten textilen Flächengebilde haben im Bereich der Sollbruchlinie aneinander angrenzende, umsäumte Kanten, die an den einander zugewandten Seiten über Nähte miteinander verbunden sind. Die Anzahl und Stärke der Nähte ist so ausgebildet, daß das textile Flächengebilde im Normalzustand zusammengehalten wird und sich bei Auslösung des Airbags durch die von dem Airbag ausgeübte Kraft im Bereich der Sollbruchlinie öffnet.

Nachteilig bei derartigen bekannten Flächengebilden ist, daß die Sollbruchlinie bei diesen textilen Flächengebilden stets als Naht sichtbar ist und optisch unschön wirkt.

Der Erfindung liegt die Aufgabe zugrunde, ein textiles Flächengebilde zu schaffen, welches eine von der Sichtseite her unsichtbare Sollbruchlinie aufweist.

Zur Lösung dieser Aufgabe ist gemäß Anspruch 1 ein textiles Flächengebilde mit einem eine Oberware und eine Unterware mit Fadensystemen mit jeweils, Kett- und Schußfäden aufweisenden Doppelgewebe vorgesehen (wie es aus GB 1 507 152 A bekannt ist), bei dem im Bereich der gewünschten Sollbruchlinie ein aus der Ober- in die Unterware wechselndes Fadensystem und ein aus der Unter- in die Oberware wechselndes Fadensystem vorgesehen ist und beidseitig der gewünschten Sollbruchlinie die Fäden der im Bereich der Sollbruchlinie zwischen der Ober- und der Unterware sowie der Unter- und der Oberware wechselnden Fadensysteme in der Unterware durchtrennt sind. Da die Fäden des jeweils von der Ober- in die Unterware und umgekehrt wechselnden Fadensystems jeweils vor und hinter dieser Wechselstelle im Bereich der Unterware zerschnitten sind, gleiten die durchtrennten Fäden bei Aufbringen einer Kraft quer zur Sollbruchlinie aneinander vorbei, und zwar solange, bis das textile Flächengebilde im Bereich der Sollbruchlinie in zwei Teile getrennt ist. Das Vorhandensein der Sollbruchlinie ist jedoch im Normalzustand von der Oberseite bzw. der Sichtseite des textilen Flächengebildes aus nicht sichtbar. Bei den von der Ober- in die Unterware und umgekehrt wechselnden Fadensystemen kann es sich sowohl um Schußfäden als auch um Kettfäden handeln.

Das textile Flächengebilde kann als Schaftgewebe oder auch als Jacquardgewebe, als einfarbiges oder gemustertes Gewebe und als Gewebe mit unterschiedlichsten Bindungen ausgeführt sein. Nach dem Webvorgang sind außer dem Schneide- bzw. Durchtrennvorgang keine zusätzlichen Arbeitsprozesse, wie beispielsweise Verkleben und/oder Vernähen von Gewebeteilen, erforderlich.

Das erfindungsgemäße textile Flächengebilde mit Sollbruchlinie kann vielfältig eingesetzt werden, so beispielsweise als Geotextilie im Landschaftsbau, als Abdeckung für Behältnisse, als Trägermaterial oder auch als Verkleidung für technische Bauteile.

Die Erfindung wird nachfolgend anhand der beigefügten Zeichnungen beispielhaft näher erläutert. Es zeigen:

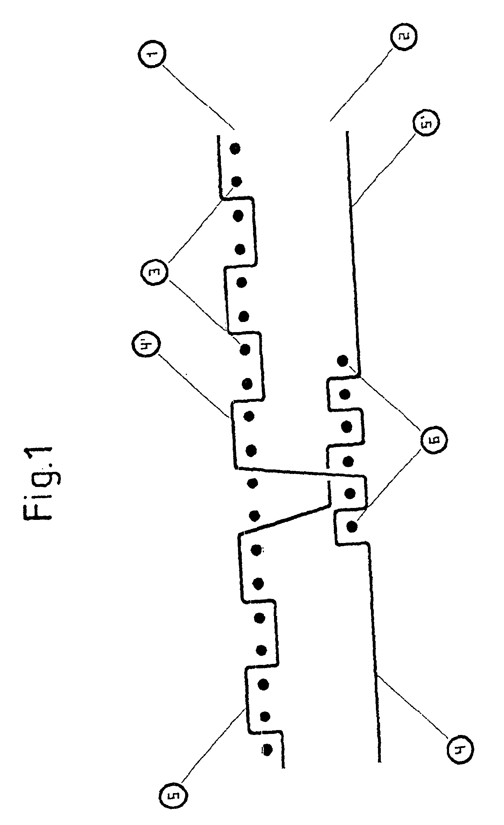

- Fig. 1: eine schematisch gehaltene Schnittdarstellung durch ein Doppelgewebe mit zwischen Ober- und Unterware wechselnden Fadensystemen;
- Fig. 2: eine Darstellung entsprechend Fig. 1 mit einer schematischen Andeutung des Durchtrennens der zwischen Ober- und Unterware und umgekehrt wechselnden Fadensysteme in der Unterware;
- Fig. 3: eine Darstellung entsprechend Fig. 2 mit der schematischen Darstellung eines im Bereich der Sollbruchlinie auf das textile Flächengebilde von der Unterware her einwirkenden Airbags;

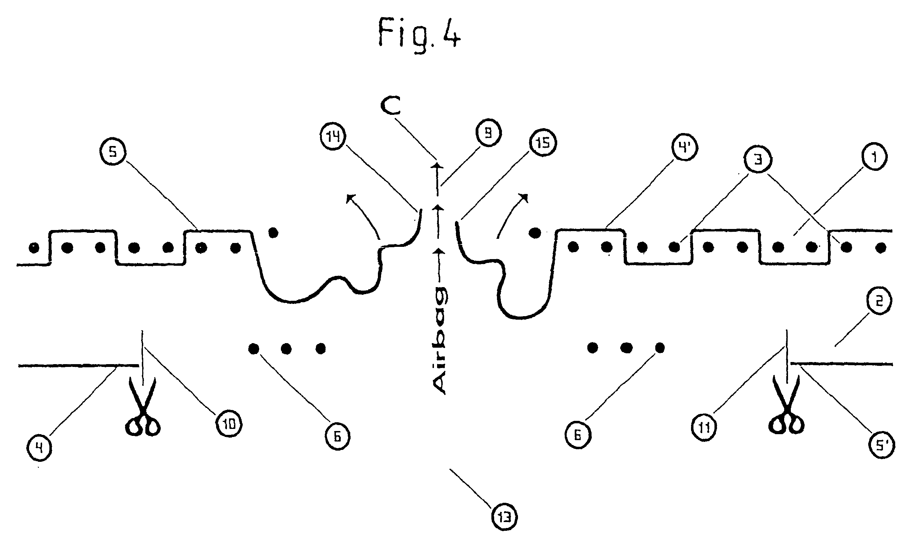

- Fig. 4: eine Darstellung entsprechend Fig. 3 mit durch die Wirkung der von dem Airbag aufgebrachten Kraft getrennter Sollbruchlinie.

Ein textiles Flächengebilde weist eine schematisch dargestellte Oberware 1 sowie eine ebenfalls schematisch dargestellte Unterware 2 auf. Die Oberware 1 hat Kettfäden 3 sowie Schußfäden 4 und 5. Die Unterware 2 hat Kettfäden 6 sowie Schußfäden 4' bzw. 5'. Im Bereich einer Sollbruchlinie 9 wechseln die Schußfäden 5 aus der Oberware 1 in die Unterware und werden dort als Schußfäden 5' weitergeführt. Entsprechend wechseln die Schußfäden 4' aus der Unterware 2 in die Oberware 1 und werden dort als Schußfäden 4 weitergeführt.

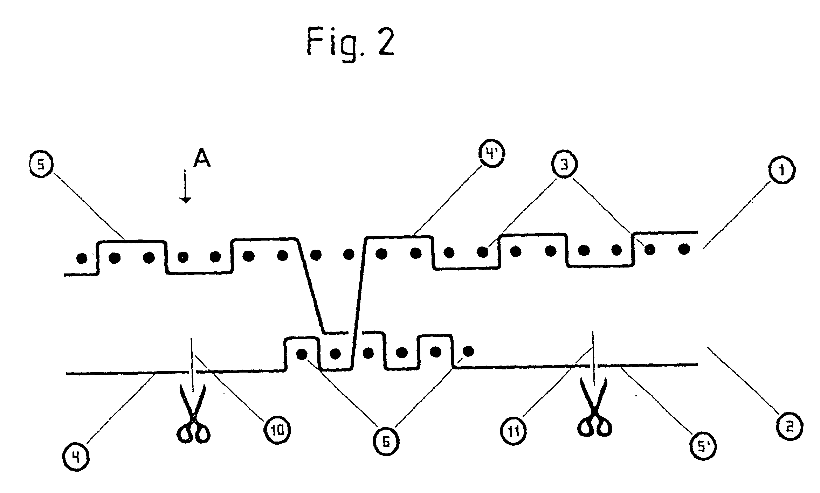

Zur Erzielung der gewünschten Sollbruchlinie sind die Kettfäden 4' und 5' in der Unterware 2 beidseitig des Bereiches der Sollbruchlinie durchtrennt, wie durch die schematischen Trennstellen 10 und 11 angedeutet und in Fig. 2 dargestellt. Die Trennstellen 10 und 11 sind bei Betrachtung der Oberseite der Oberware 1 in Pfeilrichtung A nicht sichtbar.

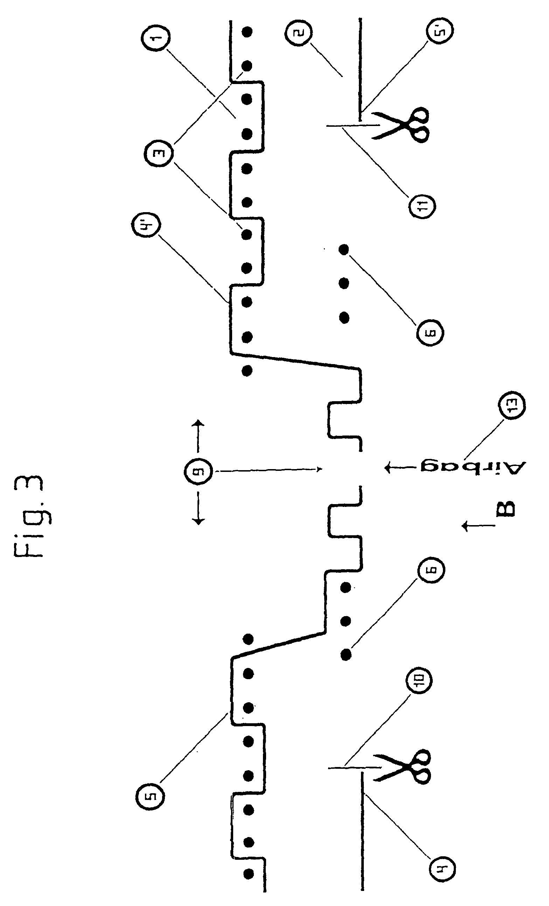

Wird - beispielsweise durch den in Fig. 3 schematisch dargestellten Airbag 13 - in Pfeilrichtung B auf die Unterseite der Unterware 2 eine Kraft quer zur Ebene des aus Unter- und Oberware bestehenden textilen Flächengebildes ausgeübt, so werden die durchtrennten Schußfäden 4 und 5 aus der Unterware 2 herausgezogen, und zwar soweit, bis die mit 14 und 15 bezeichneten Enden völlig aus dem Untergewebe gelöst sind und somit ein Öffnungsvorgang längs der Sollbruchlinie in Pfeilrichtung C erfolgt ist.

Die Öffnungskraft ist abhängig von der Gewebedichte, der Bindungsart, den Fadeneigenschaften sowie der Gewebekonstruktion.

## Patentansprüche

1. Textiles Flächengebilde mit einem eine Oberware (1) und eine Unterware (2) mit jeweils Kettfäden (3, 6) und Schußfäden (4, 5, 4', 5') aufweisenden Doppelgewebe, **dadurch gekennzeichnet, daß** im Bereich der gewünschten Sollbruchlinie (9) ein aus der Oberware (1) in die Unterware (2) wechselndes Fadensystem und ein aus der Unterware (2) in die Oberware (1) wechselndes Fadensystem vorgesehen ist, und daß beidseitig der gewünschten Sollbruchlinie (9) die Fäden der im Bereich der Sollbruchlinie (9) zwischen der Ober- und der Unterware sowie der Unter- und der Oberware wechselnden Fadensysteme (4, 4', 5, 5') in der Unterware durchtrennt sind, d.b. Trennstellen (10, 11) aufweisen.

2. Textiles Flächengebilde nach Anspruch 1, **dadurch gekennzeichnet, daß** die durchtrennten Fäden Schußfäden sind.

3. Textiles Flächengebilde nach Anspruch 1, **dadurch gekennzeichnet, daß** die durchtrennten Fäden Kettfäden sind.

4. Anwendung eines textilen Flächengebildes nach einem der Ansprüche 1 bis 3 als Verkleidung für technische Bauteile.

5. Anwendung eines textilen Flächengebildes nach einem der Ansprüche 1 bis 3 als Geotextilie im Landschaftsbau.

6. Anwendung eines textilen Flächengebildes nach einem der Ansprüche 1 bis 3 als Abdeckung für Behältnisse.

7. Anwendung eines textilen Flächengebildes nach einem der Ansprüche 1 bis 3 als Trägermaterial.

## Claims

1. Textile sheet material having a double-woven cloth possessing an upper fabric (1) and a lower fabric (2) each having warp threads (3, 6) and weft threads (4, 5, 4', 5'), **characterized in that** in the region of the desired predetermined breaking line (9) a thread system alternating from the upper fabric (1) into the lower fabric (2) and a thread system alternating from the lower fabric (2) into the upper fabric (1) is provided and that on both sides of the desired predetermined breaking line (9) the threads of the thread systems (4, 4', 5, 5') alternating in the region of the predetermined braking line (9) between the upper and the lower fabric and the lower and the upper fabric are severed in the lower fabric, ie have parting points (10, 11).

2. Textile sheet material according to Claim 1, **characterized in that** the severed threads are weft threads.

3. Textile sheet material according to Claim 1, **characterized in that** the severed threads are warp threads.

4. Application of a textile sheet material according to one of Claims 1 to 3 as cladding for engineering components.

5. Application of a textile sheet material according to one of Claims 1 to 3 as geotextile in landscaping.

6. Application of a textile sheet material according to one of Claims 1 to 3 as covering for containers.

7. Application of a textile sheet material according to one of Claims 1 to 3 as support material.

## Revendications

1. Structure textile plane avec un tissu double comportant une nappe supérieure (1) et une nappe inférieure (2) respectivement avec des fils de chaîne (3, 6) et des fils de trame (4, 5, 4', 5'), **caractérisée en ce qu'**il est prévu, au niveau de la ligne de rupture désirée (9), un système de fils passant de la nappe supérieure (1) dans la nappe inférieure (2) et un système de fils passant de la nappe inférieure (2) dans la nappe supérieure (1), et **en ce que** les fils des systèmes de fils (4, 4', 5, 5') passant dans la région de la ligne de rupture désirée (9) entre la nappe supérieure et la nappe inférieure et entre la nappe inférieure et la nappe supérieure sont séparés dans la nappe inférieure des deux côtés de la ligne de rupture désirée (9), c'est-à-dire qu'ils comprennent des emplacements de séparation (10, 11).

2. Structure textile plane selon la revendication 1, **caractérisée en ce que** les fils séparés sont des fils de trame.

3. Structure textile plane selon la revendication 1, **caractérisée en ce que** les fils séparés sont des fils de chaîne.

4. Application d'une structure textile plane selon l'une quelconque des revendications 1 à 3 à titre d'habillage pour des composants techniques.

5. Application d'une structure textile plane selon l'une quelconque des revendications 1 à 3 à titre de géotextiles dans les travaux publics.

6. Application d'une structure textile plane selon l'une quelconque des revendications 1 à 3 à titre de recouvrement pour des réceptacles.

7. Application d'une structure textile plane selon l'une quelconque des revendications 1 à 3 à titre de matériau porteur.
